# EUROPEAN PATENT APPLICATION

(11) **EP 3 316 502 A1**
(43) Date of publication of application: **02.05.2018**
(21) Application number: 16306419.9
(22) Date of filing: 28.10.2016
(51) Int. Cl.: H04J 14/02, H04B 10/079

(54) **METHOD AND DEVICE FOR MONITORING AN OPTICAL NETWORK**

(71) Applicant: Alcatel Lucent, 91620 Nozay (FR)
(72) Inventor: DUPUIS, Nicolas, 6041 Gosselies (BE); DROOGHAAG, Benoît, 6041 Gosselies (BE)
(74) Representative: Nokia Bell Patent Attorneys

(57) **Abstract**

Embodiments relate to a method for monitoring an optical network (1), executed by a monitoring device (11), wherein the optical network (1) comprises:
- a plurality of Optical Line Terminations (2) and a plurality of Optical Network Terminals (5), wherein an Optical Line Termination (2) is configured for sending an optical stream at an associated wavelength to one or more associated Optical Network Terminals (5) configured for receiving said optical stream at said associated wavelength, wherein the Optical Line Terminations (2) are associated with different wavelengths,
- a multiplexer (3) connected to the Optical Line Terminations (2), configured for multiplexing said optical streams into a feeder optical fiber (8),
- an optical distribution network comprising said feeder optical fiber (8), at least one splitter (4) and a plurality of distribution optical fibers (10) for connecting said multiplexer (3) to the Optical Network Terminals (5),
the method comprising:
- receiving (S1) operational data specifying received powers of the Optical Network Terminals (5),
- for respective Optical Network Terminals (5), determining (52) an expected received power threshold (TH), and
- detecting (53) impairments in said optical network (1) in function of comparisons between the received powers and the expected received power thresholds (TH) of the Optical Network Terminations (5).

## Description

### FIELD OF THE INVENTION

The present invention relates to the field of telecommunication. In particular, the present invention relates to a method and a device for monitoring an optical network.

### BACKGROUND

In existing optical distribution networks, for example based on GPON, the detection and localization of the presence of a fiber fault or degradation may be performed, if feasible, making use of operational parameters such as the received power of the Optical Network Terminals (ONTs).

One solution for fault detection is to compare the received power of an ONT with previous values and/or with the received power of other ONTs. When the received power is lower, an impairment is detected.

Then, fault localization is performed by taking into account the detected impairments. For instance, if a low power is received at an ONT while all the remaining ONTs, sharing the same last distribution splitter, are receiving an expected power level, suspicions of a bad connection for the last fiber branch of the problematic ONT may be raised. By contrast, if all the ONTs are suffering from such a low power, a suspicion of a corrupted connection at the splitter level itself may be raised. However, in existing solutions, fault localization and root cause identification capabilities are limited. This leads to the presence of false positive (incorrect statement or incorrect fault location).

Another existing fault localization technique is embedded time domain reflectometry (eOTDR). However, when used with point-to-multi-point networks, such techniques suffer from different drawbacks and limitations. In particular, it is not straightforward to infer about loop position in a point-to-multi-point network using reflectometry, and splitters limits drastically the range of visibility in the network.

### SUMMARY

It is thus an object of embodiments of the present invention to propose methods and devices for monitoring an optical network, which do not show the inherent shortcomings of the prior art.

Accordingly, embodiments relate to a method for monitoring an optical network, executed by a monitoring device, wherein the optical network comprises:
- a plurality of Optical Line Terminations and a plurality of Optical Network Terminals, wherein an Optical Line Termination is configured for sending an optical stream at an associated wavelength to one or more associated Optical Network Terminals configured for receiving said optical stream at said associated wavelength, wherein the Optical Line Terminations are associated with different wavelengths,
- a multiplexer connected to the Optical Line Terminations, configured for multiplexing said optical streams into a feeder optical fiber,
- an optical distribution network comprising said feeder optical fiber, at least one splitter and a plurality of distribution optical fibers for connecting said multiplexer to the Optical Network Terminals,
the method comprising:
- receiving operational data specifying received powers of the Optical Network Terminals,
- for respective Optical Network Terminals, determining an expected received power threshold, and
- detecting impairments in said optical network in function of comparisons between the received powers and the expected received power thresholds of the Optical Network Terminations.

In some embodiments, the operational data specify the transmitted power of the Optical Line Termination, the method comprising determining the expected received power threshold of an Optical Network Terminal in function of the transmitted power of the associated Optical Line Termination and of topology data specifying successive elements of a link between the Optical Network Terminal and the associated Optical Line Termination and properties of said elements.

The elements may include at least one of: optical fibers, an amplifier, said multiplexer, one or more splitters, optical transceivers.

The properties may include at least one of: a gain of an amplifier, a split ratio of a splitter, a length of an optical fiber.

The properties may include at least one of a gain accuracy, a split ratio accuracy, a transceiver accuracy.

In some embodiments, the method comprises localizing a fault in said optical network in function of the detected impairments and of topology data specifying the association between Optical Network Terminals and Optical Line Terminations.

Localizing a fault may comprise performing domain separation between an operator's premises domain comprising at least the Optical Line Terminals and at least one other domain.

In some embodiments, the at least one other domain comprises an outside domain comprising said optical distribution network and/or customer premises domains comprising the Optical Network Terminals.

In some embodiments, the method comprises localizing a fault in the operator's premises domain in response to detecting impairments affecting the Optical Network Terminals associated with a first wavelength and not detecting impairments affecting the Optical Network Terminals associated with other wavelengths.

In some embodiments, the operational data specify whether an Optical Network Terminal is able to establish a connection, the method comprising localizing a fault in customer premises domains in response to not detecting impairments affecting the Optical Network Terminal and determining that Optical Network Terminal associated with a given wavelength are not able to establish a connection and that the Optical Network Terminal associated with other wavelengths are able to establish a connection.

The method may comprise:
- for respective elements of the optical network, determining a fault ratio in function of a number of Optical Network Terminals associated with said element, which are affected by an impairment, and a total number of Optical Network Terminals associated with said element,
- localizing a fault in function of the fault ratios.

Embodiments also relate to a computer program comprising instructions for performing the method mentioned before when said instructions are executed by a computer.

Embodiments also relates to a monitoring device for monitoring an optical network comprising:
- a plurality of Optical Line Terminations and a plurality of Optical Network Terminals, wherein an Optical Line Termination is configured for sending an optical stream at an associated wavelength to one or more associated Optical Network Terminals (configured for receiving said optical stream at said associated wavelength, wherein the Optical Line Terminations are associated with different wavelengths,
- a multiplexer connected to the Optical Line Terminations, configured for multiplexing said optical streams into a feeder optical fiber,
- an optical distribution network comprising said feeder optical fiber, at least one splitter and a plurality of distribution optical fibers for connecting said multiplexer to the Optical Network Terminals,
the monitoring device comprising means configured for:
- receiving operational data specifying received powers of the Optical Network Terminals,
- for respective Optical Network Terminals, determining an expected received power threshold, and
- detecting impairments in said optical network in function of comparisons between the received powers and the expected received power thresholds of the Optical Network Terminations.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a bloc diagram of an optical network,
Figure 2 is a flowchart of a method for monitoring the optical network of Figure 1, and
Figure 3 is structural view of a monitoring device of the network of Figure 1.

### DESCRIPTION OF EMBODIMENTS

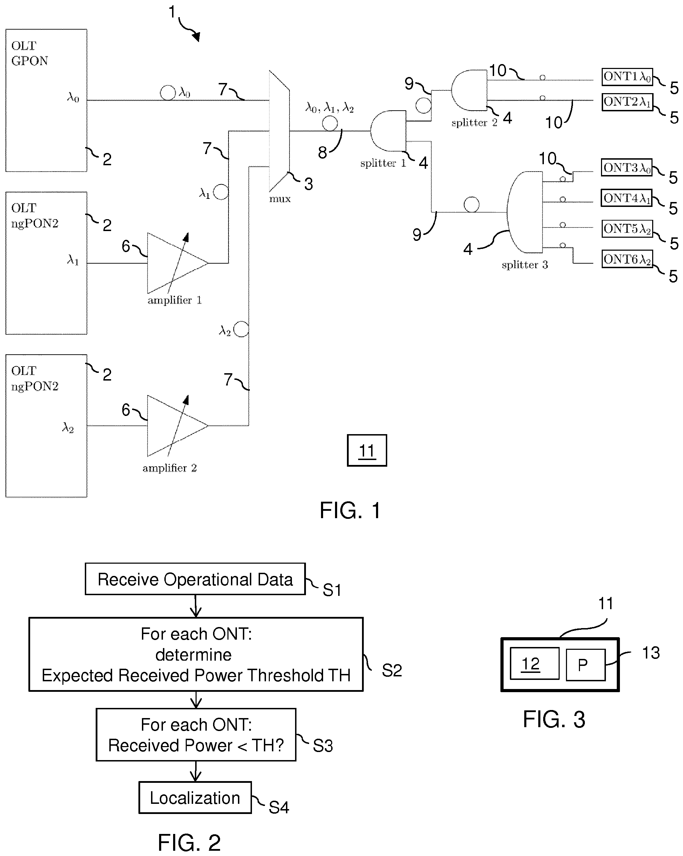

**Figure 1** is a bloc diagram of an optical network 1. The optical network 1 comprises a plurality of Optical Line Terminations 2 (OLT), a multiplexer 3, one or more splitters 4, a plurality of Optical Network Terminals 5 (ONT), amplifiers 6, optical fibers 7, 8, 9 and 10 and a monitoring device 11.

For downstream communication, an OLT 2 is configured for sending an optical stream at an associated wavelength to one or more associated ONTs 5 configured for receiving said optical stream at said associated wavelength. The OLTs 2 use different wavelengths and may use different technologies. In the illustrated example, the optical network 1 comprises three OLTs 2, using respectively GPON at wavelength λ₀, ngPON2 at wavelength λ₁ and ngPON2 at wavelength λ₂, wherein the wavelengths λ₀, λ₁' and λ₂ are different from each other. An ONT 5 is configured for receiving one of the optical stream at the associated wavelength. Some ONTs 5 and the associated wavelengths are shown on Figure 1.

Upstream communication is not illustrated on Figure 1, but may also rely on different wavelengths associated with respective OLTs 2.

The OLTs 2 are connected to the multiplexer 3 by respective connecting optical fiber 7 and, the case may be, amplifiers 6. The multiplexer 3 combines (by wavelength multiplexing) the optical streams from the respective OLTs 2 into a feeder optical fiber 8.

The multiplexer 3 is connected to the ONTs 5 through an optical distribution network including the feeder optical fiber 8, the splitters 4 and the optical fibers 8 and 9. More specifically, a collector optical fiber 9 connects two splitters 4 and a distribution optical fiber 10 connects a splitter 4 to an ONT 5.

The monitoring device 11 is configured for communication with the OLTs 2 and/or the ONTs 5. Accordingly, the monitoring device 11 may obtain operational data related to the functioning of the OLTs 2 and the ONTs 5. The monitoring device 11 uses the obtained operational data for detecting impairments and localizing faults in the optical network 1, as is described hereafter with reference to Figure 2.

It should be noted that the optical network 1 relies on multiple wavelengths for downstream communication. This is in contrast with for example a GPON network wherein a single OLT interacts with a plurality of ONTs using a single wavelength for downstream communication.

**Figure 2** is a flowchart of a method for monitoring the optical network 1, executed by the monitoring device 11.

As a generic description, we assume the optical network 1 shares M wavelengths associated with respective OLTs 2 and technologies (GPON, ngPON2...) which get multiplexed in the optical distribution network. We also assume the presence of N operating ONTs 5 operating at one of the M wavelengths.

The monitoring device 11 stores and/or has access to topology data of the optical network 1. The topology data specifies for example:
- The topology of the optical network 1, for example in a data structure wherein each element of the optical network 1 is identified, and wherein its connection to other elements and related properties are specified. Such properties may include:
   ∘ The lengths of the optical fibers 7, 8, 9, 10.
   ∘ The spilt-ratios of the splitters 4.
   ∘ The gains of the amplifiers 6.
   ∘ Accuracies of gains, split rations, transceivers.
- The associations between OLTs 2 and ONTs 5, for example by specifying the wavelengths associated with the respective OLTs 2 and ONTs 5:
   ∘ Wavelenght_OLT = [λ₀ λ₁ λ₂] (M=3)
   ∘ Wavelenght_ONT = [λ₀ λ₁ λ₀ λ₁ λ₂ λ₂] (N=6)

The monitoring device 11 receives operational data related to the functioning of the optical network 1 (Step S1). For example, the monitoring device 11 requests the operational data from the OLTs 2 and/or ONTs 5, or the OLTs 2 and/or ONTs 5 regularly send the operational data to the monitoring device 11. The operational data specify various operational parameters, including the transmitted power of the OLTs 2 and the received power of the ONTs 5. For example, the transmitted powers are specified by a (M x T) matrix and the received powers are specified by a (N x T) matrix, wherein T is a number of successive time samples.

The following is an example with T=10:
RxPower[ont, time] = [-22dB -23dB -22dB -22dB -21 dB -22dB -22dB -23dB -22dB -22dB ;
   - 23dB -23dB -24dB -23dB -23dB -22dB -23dB -23dB -24dB -23dB ;
   - 25dB -25dB -25dB -25dB -25dB -26dB -25dB -25dB -24dB -25dB ;
   - 26dB -27dB -26dB -26dB -26dB -26dB -27dB -26dB -26dB -26dB ;
   - 24dB -24dB -24dB -23dB -24dB -24dB -22dB -24dB -22dB -24dB ;
   - 24dB -25dB -24dB -23dB -24dB -23dB -24dB -24dB -22dB -24dB] TxPower[wavelength, time] =
      [-1.5 -1.5 -1.5 -1.5 -1.5 -1.5 -1.5 -1.5 -1.5 -1.5 ;
      -0.5 -0.5 -0.5 -0.5 -0.5 -0.5 -0.5 -0.5 -0.5 -0.5 ;
      -2.5 -2.5 -2.5 -2.5 -2.5 -2.5 -2.5 -2.5 -2.5 -2.5]

Then, the monitoring device 11 determines, for the respective operating ONTs 5, an expected received power threshold TH (Step S2). In some embodiments, the expected received power threshold TH of an ONT 5 is determined in function of the transmitted power of the associated OLT 2 and of the topology data. Indeed, by knowing the transmitted power values as well the topology of a fiber link (usually containing connectors, fibers, splitters and potentially an amplifier), it is possible to derive an estimation of the theoretical received power, for a given ONT 5. As the measurements are never perfectly accurate, in some embodiments, such theoretical power estimation makes use of the different accuracies of the required measurements in order to propose a most probable value with its confidence interval (statistical uncertainty zone). For example, for a given ONT 5:
- Total Accuracy(stream, splitterRatio) = OLT transceiver accuracy + Gain Accuracy(stream) + Splitter Accuracy(splitterRatio) + ONT transceiver accuracy;
- Expected Rx Power(stream,wavelength,splitterRatio) = TxPower(stream, wavelength) + Gain(stream, wavelength) - Lineic Attenuation(stream, wavelength) * distanceToOLT - Splitter Attenuation(splitterRatio);
- Expected Rx Power Threshold(stream,wavelength,splitterRatio) = Expected Rx Power(stream, wavelength) - Total Accuracy(stream,splitterRatio);

The Splitter Attenuation(splitterRatio) is defined as the sum of all the attenuations engender by the different splitters 4 present in the optical link path. The Splitter Accuracy(splitterRatio) is also defined as the sum of the respective accuracies of each splitter 4 present in the optical link path.

As a first order simplification and as it was already the case between gpon wavelengths, the splitter ratio and accuracy remain similar in gpon and ngpon2. Then the formula, per stream, is reduced to:
- Expected Rx Power Threshold(stream,wavelength,splitterRatio) = Expected Rx Power Threshold(ONT);

Some embodiments may advantageously make use of the different time samples in order to improve the accuracies of the detection, for example by computing a moving average over the time sample classified as healthy and/or to extend the accuracy zone taking care of the random noise behavior between value over time.

Then, the monitoring device 11 detects impairments in the optical network 1 by comparing, for the respective ONTs 5, the received power and the expected received power threshold TH (Step S3). For a given ONT 5, if the received power is lower than the expected received power threshold TH, an impairment is detected.

In the method of Figure 2, determining an expected received power threshold TH in function of the corresponding transmitted power and of topology data allows an accurate and reliable detection of impairments in a multiple wavelengths scenario. Indeed, since the expected received power threshold TH represents the minimal theoretical power that a ONT 5 should receive in the absence of fault, the comparison of the received power with the expected received power threshold TH is a trustworthy indicator. In contrast, comparing the received power of an ONT 5 with the received power of neighboring ONT 5 may be less reliable, specifically in case the ONTs 5 are associated with different OLTs 2 and thus different transmitted powers, gains, attenuations...

Then, the monitoring device 11 performs fault localization in function of the detected impairments and of the topology data (Step S4). Fault localization comprises for example fault domain separation between an operator's premise domain, comprising the OLTs 2, the connecting optical fibers 7, the amplifiers 6 and the multiplexer 3, an outside domain comprising the optical distribution network from the feeder optical fiber 8 to the distribution optical fibers 10, and a customer premise domain comprising the ONTs 5.

Indeed, thanks to the presence of several wavelengths, it gets possible to isolate faults affecting only one or several wavelengths, but not affecting other wavelengths. This may come from the physical path, mainly in the feeder fiber section, but also from software issues. As we will see, physical impairments affecting the feeder fiber path (for instance at the first splitter 4 level) cannot always be incriminated as being the cause, and a separation for instance with a software issue can be made. Also, if other wavelengths are working well, this allows to state about a fault within the operator's premises, allowing therefore to perform such fault domain separation, for instance. In general, thanks to the presence of degradations for some wavelengths and the non-presence in other wavelength, fault detection capability and accuracy gets increased and fault domain separation becomes more accurate.

A first example of fault localization relates to the presence of a physical fault at the operator premises. In the case where there is a connector which gets degraded or disconnected from a SFP (Small form-factor pluggable), so at the operator's premises for one of the wavelength in use, this leads to propose a reduce or no RxPower for only the ONTs 5 driven with that wavelength. All the remaining ONTs 5, driven under other wavelengths, keep working with their expected power. This is formalized as follows:
- RxPower(ONT[λ₀, i]) < Expected received power threshold TH
- RxPower(ONT[λ_{X} except λ₀, i]) > = Expected received power threshold
TH

Thanks to such behaviors, it gets feasible to perform a better diagnosis but also to propose a clear domain separation. Indeed, referring to the example topology of Figure 1, if ONT2, ONT4, ONT5 and ONT6 keep receiving an expected power, conclusion about issues at the multiplexer 3 or at the splitter level is not relevant. Also, as the problems arise simultaneously for ONT1 and ONT3, this makes the probability to have an issue both at the connectors of splitter2 and splitter3, for the corresponding distribution optical fiber 10, to be negligible. Between ngPON2 SFP's and the multiplexer 3, there is no issues neither. As the multiplexer 3 is also located at the operator's premises, reporting an impairments located at the operator's premises and affecting the GPON devices or connection up-to the multiplexer 3 is therefore correct and allow to troubleshoot the issue at the right place, so more efficiently. There will be no advice of raising a reparation up-to the fist splitter in the field, for instance, as it would have been the case with the prior art.

A second example of fault localization relates to the presence of a broken amplifiers at operator's premises.

In the presence of a broken amplifier 6, the RxPower experience by each ONT 5 operating in ngPON2 in a given wavelength (technology) should be significantly reduced. By contrast, the RxPower experienced by the other ONT's working with different wavelengths or under different technologies (GPON) should remain unchanged. This is formalized as:
- RxPower(ONT[λ₁, i]) < Expected received power threshold TH
- RxPower(ONT[λ_{X} except λ₁, i]) >= Expected received power threshold
TH

Again, compared to a GPON-only network, having different wavelengths allows us to propose a method able to not locate the issues within the street distribution domain but instead confined it within the operator's premises domain, which really save effort and money.

A third example of fault localization relates to the presence of a software issues.

As usually operators provide similar types of device to their subscribers, potentially differing from firmware releases but hardly from SFP's (optical transceiver), having the presence of different technologies (wavelength) coexisting into the same PON force to have a presence of different types of ONT's as well as of SFPs (optical transceiver). This is formalized as:
- RxPower(ONT[λ_{X}, i]) >= Expected theoretical threshold
- ONT[λ_{X} except λ₂, i] are working.
- ONT[λ₂, i] are not working.

This assumes that the operational data specify whether an ONT 5 is working, e.g. it is able to establish a connection.

Thanks to such presence, distinction between software issues and physical issues can be made. Indeed, a physical issue affects all the frequencies used within the PON or within a part of the PON, while software issues are related to a particular type of ONTs 5, operated in a particular wavelength. In the example configuration of Figure 2, if the RxPower of any ONT's 5 is as expected but ONT5 and ONT6 cannot establish a connection, software issues within ngPON2 wavelength2 devices is suspected. Compared to a GPON-only network, as other wavelengths are working correctly, physical impairments present in the street distribution network could be more reliably left out the troubleshooting part.

In order to generalize and well as to increase our robustness and accuracies in our fault detection and diagnosis, the previous example can be extended as follows:
A concept of "Fault Ratio" gets defined. It is the ratio of links, either per splitter, per wavelength, per mux, per board/SFP, etc. which present some degradation.

If for instance, the "fault ratio" of optical links, for a given wavelength, is 1 (or close from 1 if some tolerance are allowed) and the fault ratio of the links with other wavelengths is below 1, then a fault is identified as being linked to a given wavelength, and the path where only one wavelength is in use is suspected as the faulty location.

This is formalized as:
If
   Fault Ratio[λᵢ] = 1
   Fault Ratio[λᵢ | i ≠ i] < 1
Then
   Fault is on feeder fiber path of wavelength (technology) i.

Such fault ratio concept also applies at any group level, for instance at a splitter 4 or multiplexer 3 level.

An extension, in order to gain in robustness and practical accuracy, may consists, for any group level, to allow some tolerance on the fault ratio. This is formalized as:
If
   Fault Ratio[group[i]] > A
   Fault Ratio[group[i] | i ≠ i] < B
   with for example A = 0.8 and B = 0.3
Then
   Fault is on feeder fiber path of group i.

**Figure 3** is a structural view of the monitoring device 11, which comprises a processor 12 and a memory 13. The memory 13 stores a computer program P which, when executed by the processor 12, causes the monitoring device 11 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

## Claims

1. Method for monitoring an optical network (1), executed by a monitoring device (11), wherein the optical network (1) comprises:
- a plurality of Optical Line Terminations (2) and a plurality of Optical Network Terminals (5), wherein an Optical Line Termination (2) is configured for sending an optical stream at an associated wavelength to one or more associated Optical Network Terminals (5) configured for receiving said optical stream at said associated wavelength, wherein the Optical Line Terminations (2) are associated with different wavelengths,
- a multiplexer (3) connected to the Optical Line Terminations (2), configured for multiplexing said optical streams into a feeder optical fiber (8),
- an optical distribution network comprising said feeder optical fiber (8), at least one splitter (4) and a plurality of distribution optical fibers (10) for connecting said multiplexer (3) to the Optical Network Terminals (5),
the method comprising:
- receiving (S1) operational data specifying received powers of the Optical Network Terminals (5),
- for respective Optical Network Terminals (5), determining (S2) an expected received power threshold (TH), and
- detecting (S3) impairments in said optical network (1) in function of comparisons between the received powers and the expected received power thresholds (TH) of the Optical Network Terminations (5).

2. Method according to claim 1, wherein the operational data specify the transmitted power of the Optical Line Termination (2), the method comprising determining the expected received power threshold (TH) of an Optical Network Terminal (5) in function of the transmitted power of the associated Optical Line Termination and of topology data specifying successive elements of a link between the Optical Network Terminal (5) and the associated Optical Line Termination (2) and properties of said elements.

3. Method according to claim 2, wherein said elements include at least one of: optical fibers (7, 8, 9, 10), an amplifier (6), said multiplexer (3), one or more splitters (4), optical transceivers.

4. Method according to one of claims 2 and 3, wherein said properties include at least one of: a gain of an amplifier, a split ratio of a splitter, a length of an optical fiber.

5. Method according to one of claims 2 to 4, wherein said properties include at least one of a gain accuracy, a split ratio accuracy, a transceiver accuracy.

6. Method according to one of claims 1 to 5, comprising localizing (S4) a fault in said optical network (1) in function of the detected impairments and of topology data specifying the association between Optical Network Terminals (5) and Optical Line Terminations (2).

7. Method according to claim 6, wherein localizing a fault comprise performing domain separation between an operator's premises domain comprising at least the Optical Line Terminals and at least one other domain.

8. Method according to claim 7, wherein said at least one other domain comprise an outside domain comprising said optical distribution network and/or customer premises domains comprising the Optical Network Terminals.

9. Method according to one of claims 7 and 8, comprising localizing a fault in the operator's premises domain in response to detecting impairments affecting the Optical Network Terminals (5) associated with a first wavelength and not detecting impairments affecting the Optical Network Terminals (5) associated with other wavelengths.

10. Method according to one of claims 8 and 9, wherein the operational data specify whether an Optical Network Terminal (5) is able to establish a connection, the method comprising localizing a fault in customer premises domains in response to not detecting impairments affecting the Optical Network Terminal (5) and determining that Optical Network Terminal associated with a given wavelength are not able to establish a connection and that the Optical Network Terminal associated with other wavelengths are able to establish a connection.

11. Method according to one of claim 6 to 10, comprising:
- for respective elements of the optical network, determining a fault ratio in function of a number of Optical Network Terminals associated with said element, which are affected by an impairment, and a total number of Optical Network Terminals associated with said element,
- localizing a fault in function of the fault ratios.

12. Computer program (P) comprising instructions for performing the method of one of claims 1 to 11 when said instructions are executed by a computer.

13. Monitoring device for monitoring an optical network (1) comprising:
- a plurality of Optical Line Terminations (2) and a plurality of Optical Network Terminals (5), wherein an Optical Line Termination (2) is configured for sending an optical stream at an associated wavelength to one or more associated Optical Network Terminals (5) configured for receiving said optical stream at said associated wavelength, wherein the Optical Line Terminations (2) are associated with different wavelengths,
- a multiplexer (3) connected to the Optical Line Terminations (2), configured for multiplexing said optical streams into a feeder optical fiber (8),
- an optical distribution network comprising said feeder optical fiber (8), at least one splitter (4) and a plurality of distribution optical fibers (10) for connecting said multiplexer (3) to the Optical Network Terminals (5),
the monitoring device comprising means (12, 13, P) configured for:
- receiving (S1) operational data specifying received powers of the Optical Network Terminals (5),
- for respective Optical Network Terminals (5), determining (S2) an expected received power threshold (TH), and
- detecting (S3) impairments in said optical network (1) in function of comparisons between the received powers and the expected received power thresholds (TH) of the Optical Network Terminations (5).
